# EUROPEAN PATENT APPLICATION

(11) **EP 4 560 045 A1**
(43) Date of publication of application: **28.05.2025**
(21) Application number: 23882148.2
(22) Date of filing: 13.06.2023
(51) Int. Cl.: C23C 2/26, C21D 1/18, C21D 9/00, C22C 18/00, C22C 18/04, C22C 21/00, C22C 21/10, C22C 30/06, C22C 38/00, C22C 38/06, C22C 38/60, C23C 2/04, C23C 2/12

(54) **HOT-PRESSED MEMBER AND STEEL SHEET FOR HOT PRESSING**

(30) Priority: 28.10.2022 JP 2022173720
(71) Applicant: JFE Steel Corporation, Tokyo 100-0011 (JP)
(72) Inventor: NISHIIKE, Ryoto, Tokyo 100-0011 (JP); SATO, Rinta, Tokyo 100-0011 (JP); MAKIMIZU, Yoichi, Tokyo 100-0011 (JP)
(74) Representative: Scott, Stephen John
(86) International application number: PCT/JP2023/021959
(87) International publication number: WO 2024/089931

(57) **Abstract**

Achieved are both corrosion resistance at cut portion and spot weldability at a high level in a hot pressed member with an Al-Zn coating layer, which does not have the chemical convertibility problems of an Al coated or plated steel sheet or the LME cracking problems of a Zn coated or plated steel sheet. The hot pressed member includes a steel sheet, a coating layer on at least one side of the steel sheet, and an oxide layer on the coating layer. The coating layer has a chemical composition containing, in mass%, Zn: 25.0 % to 55.0 %, Si: 1.1 % to 8.0 %, Sr + Ca: 0.01 % to 5.0 %, and Fe: 55.0 % or less, with the balance being Al and inevitable impurity. The coating layer contains a metallic Zn phase.

## Description

### TECHNICAL FIELD

The present disclosure relates to a hot pressed member and in particular to a hot pressed member having excellent post-painting corrosion resistance at cut portion and spot weldability. Further, the present disclosure relates to a steel sheet for hot press forming.

### BACKGROUND

Steel sheets for automobiles are becoming stronger in order to reduce automobile weight and improve crashworthiness of automobiles. In recent years, cold-rolled steel sheets having a tensile strength grade of 1500 MPa have been developed, and applications are being considered. However, as steel sheets become stronger, forming defects, springback, and the like occurring in press forming become issues for dimensional accuracy.

Therefore, the application of hot press forming technology, in which forming is performed hot instead of cold, is increasing. Hot press forming is a forming method in which a steel sheet is heated to the austenite temperature range, then press formed at high temperature and simultaneously rapidly cooled by contact with the press mold. In hot press forming, press forming is carried out with improved formability due to heating, and subsequent rapid cooling results in higher strength, and therefore a hot pressed member having excellent strength may be produced with high dimensional accuracy.

Steel sheets with coatings such as an Al coated or plated layer, a Zn coated or plated layer, or an Al-Zn coated or plated layer on a surface have been proposed as steel sheets for hot press forming suitable for producing hot pressed members (Patent Literature (PTL) 1 to 5).

### CITATION LIST

### Patent Literature

PTL 1: JP 2003-049256 A
PTL 2: JP 2003-073774 A
PTL 3: JP 2005-113233 A
PTL 4: WO 2017/195269 A1
PTL 5: WO 2019/180853 A1

### SUMMARY

### (Technical Problem)

Hot pressed members obtained by hot press forming steel sheets for hot press forming as described above are used as automobile members, in particular as structural members for framework (inner sheet framework), which require high strength. However, in recent years, such members are also used as so-called quasi-outer sheet members, such as members around pillars that are visible when a door is opened. Accordingly, hot pressed members are required to be suitable for coating and to have excellent post-painting corrosion resistance at cut portion.

In addition, hot pressed members are typically used by spot welding, and therefore are required to have excellent spot weldability.

However, the conventional technology as proposed in PTL 1 to 5 does not meet all of the requirements described above, as explained below.

For example, according to the technology proposed in PTL 1, a hot-dip Al coated steel sheet is used as a steel sheet for hot press forming to prevent scale and improve corrosion resistance. However, when an Al coated steel sheet is subjected to hot press forming, Fe diffuses from the base steel sheet to a surface layer of the Al coated layer, forming an FeAl alloy layer. Typically, a chemical conversion layer is formed on a hot pressed member to secure coatability before application of an electrodeposition coating, but an FeAl alloy layer does not react with the chemical conversion treatment liquid, and therefore the chemical conversion layer cannot be formed. Further, an FeAl alloy layer does not provide sacrificial protection, and therefore corrosion resistance such as corrosion resistance at cut portion is insufficient.

According to the technology proposed in PTL 2, a Zn coated or plated steel sheet is used as a steel sheet for hot press forming in order to secure painting layer adhesion and corrosion resistance. However, when a Zn coated or plated steel sheet is subjected to hot press forming, a thick oxide layer is formed on a surface of the coated or plated layer, resulting in insufficient spot weldability. In addition, Zn has a low melting point, and therefore liquid metal embrittlement (LME) cracking occurs when a steel sheet with a Zn coated or plated layer is subjected to hot press forming, and sufficient fatigue resistance cannot be obtained.

In PTL 3, improving spot weldability is proposed by forming an oxide layer containing Mn on a surface of a Zn coated or plated steel sheet. However, a mainly Zn coated or plated layer is also used in PTL 3, and therefore fatigue resistance is insufficient due to LME cracking.

Accordingly, use of Al-Zn coated or plated steel sheets has been proposed instead of Al coated or plated steel sheets, which have problems with chemical convertibility, and Zn coated or plated steel sheets, which have problems with LME cracking.

For example, in PTL 4, forming an interface layer of specific composition at the interface between the base steel sheet and the coated or plated layer is proposed, by producing a hot pressed member using an Al-Zn coated or plated steel sheet. According to PTL 4, the interface layer in a hot pressed member may prevent LME cracking and improve fatigue resistance. However, the hot pressed member still lacked sufficient spot weldability and corrosion resistance at cut portion.

According to PTL 5, forming a Mg oxide layer during hot press forming by causing an Al-Zn coated or plated steel sheet to contain Mg may obtain a hot pressed member in which Zn is not oxidized and the metallic Zn phase remains in the coating layer, obtaining high corrosion resistance. However, the hot pressed member did not have sufficient spot weldability due to the Mg oxide layer becoming an insulating layer.

Thus, even with technology using an Al-Zn coated or plated steel sheet, a hot pressed member that combines a high level of spot weldability and corrosion resistance at cut portion has not been realized.

The present disclosure is made in view of the situation described above, and it would be helpful to achieve both corrosion resistance at cut portion and spot weldability at a high level in a hot pressed member with an Al-Zn coating layer, which does not have the chemical convertibility problems of an Al coated or plated steel sheet or the LME cracking problems of a Zn coated or plated steel sheet.

### (Solution to Problem)

As a result of examination, the following discoveries were made.
(1) Adding a specific amount of Si to an Al-Zn coated or plated layer suppresses alloying during heating, resulting in improved spot weldability and corrosion resistance at cut portion of a hot pressed member.
(2) When an Al-Zn coated or plated layer contains a trace amount of Sr or Ca, Sr and Ca are preferentially oxidized to form a surface barrier. This results in suppression of oxide layer formation and improved spot weldability of a hot pressed member. In addition, Zn oxidation is suppressed and remains as a metallic Zn phase within the coating layer, which improves corrosion resistance.
(3) Accordingly, a hot pressed member obtained from an Al-Zn coated or plated steel sheet containing specific amounts of Si and at least one of Sr or Ca has both excellent spot weldability and corrosion resistance at cut portion.

The present disclosure is based on the discoveries described above, and primary features of the present disclosure are as described below.
1. A hot pressed member comprising:
   a steel sheet;
   a coating layer on at least one side of the steel sheet; and
   an oxide layer on the coating layer,
   wherein
   the coating layer has a chemical composition containing (consisting of), in mass%,
   Zn: 25.0 % to 55.0 %,
   Si: 1.1 % to 8.0 %,
   Sr + Ca: 0.01 % to 5.0 %, and
   Fe: 55.0 % or less,
   with the balance being Al and inevitable impurity, and
   the coating layer contains a metallic Zn phase.
2. The hot pressed member according to 1 above, wherein the thickness of the oxide layer is 0.3 µm or less.
3. A steel sheet for hot press forming, comprising a steel sheet and a coated or plated layer on at least one side of the steel sheet, wherein
   the coated or plated layer has a chemical composition containing (consisting of), in mass%,
   Zn: 30.0 % to 70.0 %,
   Si: 1.1 % to 8.0 %, and
   Sr + Ca: 0.01 % to 5.0 %,
   with the balance being Al and inevitable impurity.

### (Advantageous Effect)

The present disclosure provides a hot pressed member that combines a high level of corrosion resistance at cut portion and spot weldability.

### DETAILED DESCRIPTION

The following describes embodiments of the present disclosure. The following merely describes preferred embodiments of the present disclosure, and the present disclosure is by no means limited to the embodiments described. Further, the unit of content, "%," represents "mass%" unless otherwise specified.

### (1) Hot pressed member

The hot pressed member according to an embodiment of the present disclosure includes a steel sheet, a coating layer on at least one side of the steel sheet, and an oxide layer on the coating layer. Each is described below.

### [Steel sheet]

The present disclosure solves the technical problems described above by controlling the chemical composition of the coating layer to cause the coating layer to contain a metallic Zn phase, as described below. Accordingly, any steel sheet may be used as the steel sheet, without any particular limitation.

The hot pressed member is produced by subjecting a steel sheet for hot press forming to hot press forming, as described below. Accordingly, the steel sheet may also be referred to as a steel sheet formed by hot press forming. The steel sheet may be either a cold-rolled steel sheet or a hot-rolled steel sheet.

From the viewpoint of use as an automobile member or the like, a high strength hot pressed member is preferred. In particular, in order to obtain a hot pressed member that exceeds the 1470 MPa grade, use of a steel material that has the following chemical composition is preferred.
C: 0.20 % to 0.35 %,
Si: 0.1 % to 0.5 %,
Mn: 1.0 % to 3.0 %,
P: 0.02 % or less,
S: 0.01 % or less,
Al: 0.1 % or less, and
N: 0.01 % or less,
with the balance being Fe and inevitable impurity.

The following is a description of the effects of each element in the above preferred chemical composition and the preferred content of each element.

### C: 0.20 % to 0.35 %

C is an element that has an effect of increasing strength by causing formation of microstructure such as martensite. From the viewpoint of obtaining strength exceeding the 1470 MPa grade, C content is preferably 0.20 % or more. However, when the C content exceeds 0.35 %, toughness of spot welded portions deteriorates. The C content is therefore preferably 0.35 % or less.

### Si: 0.1 % to 0.5 %

Si is an effective element in strengthening steel to obtain good material properties. To achieve the above effect, Si content is preferably 0.1 % or more. However, when the Si content exceeds 0.5 %, ferrite is stabilized and hardenability is reduced. Therefore, the Si content is preferably 0.5 % or less.

### Mn: 1.0 % to 3.0 %

Mn is an effective element for increasing steel strength. From the viewpoint of securing excellent mechanical properties and strength, Mn content is preferably 1.0 % or more. However, when the Mn content exceeds 3.0 %, the amount of Mn concentrated on the steel sheet surface during annealing increases, resulting in decreased coating adhesion. The Mn content is therefore preferably 3.0 % or less.

### P: 0.02 % or less

P content in excess of 0.02 % degrades local ductility due to grain boundary embrittlement caused by P segregation to austenite grain boundaries during casting. As a result, balance between strength and ductility of the steel sheet is reduced. Therefore, from the viewpoint of improving the balance between strength and ductility of the steel sheet, the P content is preferably 0.02 % or less. From the above viewpoint, the lower the P content, the better, and therefore a lower limit of the P content is not particularly limited and may be 0 %. From the viewpoint of refining costs, the P content is preferably 0.0005 % or more.

### S: 0.01 % or less

S forms as inclusions such as MnS, which cause degradation of impact resistance and cracking along metal flow in welded portions. Therefore, decreasing S content as much as possible is desirable, and specifically 0.01 % or less is preferred. Further, from the viewpoint of securing good stretch flange ability, 0.005 % or less is preferred. From the above viewpoint, the lower the S content, the better, and therefore a lower limit of the S content is not particularly limited and may be 0 %. From the viewpoint of refining costs, the S content is preferably 0.0002 % or more.

### Al: 0.1 % or less

Al is an element that acts as a deoxidizer. However, when Al content exceeds 0.1 %, hardenability is reduced. The Al content is therefore preferably 0.1 % or less. A lower limit of the Al content is not particularly limited. From the viewpoint of increasing the effectiveness as a deoxidizer, the Al content is preferably 0.01 % or more.

### N: 0.01 % or less

When N content exceeds 0.01 %, AlN is formed during heating before hot press forming, and hardenability is reduced. The N content is therefore preferably 0.01 % or less. A lower limit of N content is not particularly limited. From the viewpoint of refining costs, the N content is preferably 0.001 % or more.

Further, the chemical composition may optionally include at least one selected from the group consisting of:
Nb: 0.05 % or less,
Ti: 0.05 % or less,
B: 0.0002 % to 0.0050 %,
Cr: 0.1 % to 0.3 %, and
Sb: 0.003 % to 0.03 %.

### Nb: 0.05 % or less

Nb is an effective component for strengthening steel. However, excessive addition of Nb reduces shape fixability. Therefore, when Nb is included, the Nb content is preferably 0.05 % or less. A lower limit of the Nb content is not particularly limited and may be 0 %. From the viewpoint of the strength improving effect, the Nb content is preferably 0.005 % or more.

### Ti: 0.05 % or less

Ti, like Nb, is also an effective component for strengthening steel. However, excessive addition of Ti reduces shape fixability. Therefore, when Ti is added, Ti content is preferably 0.05 % or less. A lower limit of the Ti content is not particularly limited and may be 0 %. From the viewpoint of the strength improving effect, the Ti content is preferably 0.005 % or more.

### B: 0.0002 % to 0.0050 %

B has an effect of inhibiting the formation and growth of ferrite from austenite grain boundaries. When B is added, in order to obtain this effect, B content is preferably 0.0002 % or more. However, excessive addition of B decreases formability. Therefore, when B is added, the B content is preferably 0.0050 % or less.

### Cr: 0.1 % to 0.3 %

Cr is a useful element for strengthening steel and improving hardenability. When Cr is added, in order to obtain these effects, Cr content is preferably 0.1 % or more. However, Cr is an expensive element, and therefore excessive addition of Cr can significantly increase costs. Therefore, when Cr is added, the Cr content is preferably 0.3 % or less.

### Sb: 0.003 % to 0.03 %

Sb is an element that acts to inhibit decarburization of the steel sheet surface layer during hot press forming. When Sb is added, in order to obtain this effect, Sb content is preferably 0.003 % or more. However, when the Sb content exceeds 0.03 %, rolling load increases, resulting in lower productivity. Therefore, when Sb is added, the Sb content is preferably 0.03 % or less.

### [Coating layer]

The hot pressed member includes a coating layer on at least one side of the steel sheet. The coating layer may be provided on only one side of the steel sheet, but is preferably provided on both sides.

The hot pressed member contains a metallic Zn phase in the coating layer. In a corrosion environment, the metallic Zn phase produces a sacrificial protection effect, resulting in high corrosion resistance. When Zn is present only in the solid solution state in the coating layer, the desired corrosion resistance cannot be obtained, and therefore Zn needs to be present as a metallic Zn phase in the coating layer. The presence or absence of the metallic Zn phase in the coating layer can be evaluated by X-ray diffraction.

The coating layer has a chemical composition containing Zn, Si, at least one of Sr or Ca, and Fe in specified amounts, with the balance consisting of Al and inevitable impurity. Each of the components is described below.

### Zn: 25.0 % to 55.0 %

When Zn content of the coating layer is less than 25.0 %, the coating layer does not include a metallic Zn phase, and the desired corrosion resistance at cut portion cannot be obtained. Therefore, the Zn content is 25.0 % or more. When the Zn content is 30.0 % or more, more metallic Zn phase is present in the coating layer, and therefore corrosion resistance at cut portion is further improved. The Zn content is therefore preferably 30.0 % or more. However, when the Zn content exceeds 55.0 %, as a result of increased Zn oxide formation, the desired spot weldability becomes unobtainable. The Zn content is therefore 55.0 % or less. The Zn content is preferably 50.0 % or less.

### Si: 1.1 % to 8.0 %

Si is an element that inhibits alloying of the coated or plated layer during the coating or plating process and the heat treatment process before hot press forming. Here, it is known that Zn in the coated or plated layer is extruded to the surface layer during the heat treatment process as Fe diffuses into the coated or plated layer. That is, when alloying of the coated or plated layer progresses excessively, Zn forms an oxide layer before Sr and Ca oxidize and form a surface barrier. This cannot obtain the desired weldability, and the amount of Zn in the coating layer is decreased, resulting in reduced corrosion resistance. Si content in the finally obtained coating layer is therefore 1.1 % or more. The Si content is preferably 1.3 % or more. However, excessive Si content increases the amount of Si oxides formed, resulting in a loss of chemical convertibility and degraded corrosion resistance. The Si content is therefore 8.0 % or less. The Si content is preferably 4.0 % or less.

### Sr + Ca: 0.01 % to 5.0 %

Sr and Ca are each an element that has an effect of improving weldability by suppressing oxide layer formation. That is, Sr and Ca are preferentially oxidized to form a surface barrier, resulting in suppression of oxide layer formation to improve weldability. Further, suppression of oxide layer formation causes Zn contained in the coating layer to remain in the coating layer without oxidation, resulting in improved corrosion resistance. In the present disclosure, it is therefore important that the coating layer contains one or both of Sr and Ca. However, when the total content of Sr and Ca is less than 0.01 %, the desired effect cannot be obtained. The total content of Sr and Ca is therefore 0.01 % or more. The total content of Sr and Ca is preferably 0.1 % or more. However, excessive content of Sr and Ca results in excessive formation of Sr and Ca oxides themselves, which degrades spot weldability. The total content of Sr and Ca is therefore 5.0 % or less. The total content of Sr and Ca is preferably 1.0 % or less. In the present disclosure, the total content of Sr and Ca is referred to as "Sr + Ca".

### Fe: 55.0 % or less

Fe diffuses from the steel sheet to the coated or plated layer due to heating before hot press forming, and therefore Fe is inevitably contained in the coating layer of the hot pressed member. However, as the Fe content increases, a solid solution limit of Zn in the coating layer decreases, and Zn becomes concentrated in the surface layer of the coating layer. As a result, formation of Zn oxide becomes excessive and weldability deteriorates. The Fe content is therefore 55.0 % or less. The Fe content is preferably 50.0 % or less. A lower limit of the Fe content is not particularly limited. When produced under typical conditions, the Fe content may be 20.0 % or more.

The chemical composition of the coating layer can be measured by scanning electron microscope (SEM) energy-dispersive X-ray (EDX) analysis.

The coating weight of the coating layer is not particularly limited. From the viewpoint of corrosion resistance, a coating weight of 60 g/m² or more per steel sheet side is preferred. From the viewpoint of production cost, a coating weight of 400 g/m² or less per steel sheet side is preferred. Coating weight of the coating layer can be determined by dissolving and removing the coating layer from the surface of the hot pressed member using an acid solution and subtracting the weight after removal from the weight of the hot pressed member before removal. An inhibitor that inhibits dissolution of the base steel sheet is added to the acid solution.

### [Oxide Layer]

When the steel sheet for hot press forming is subjected to hot press forming, at the same time as Fe in the steel substrate diffuses into the coating layer to form the above coating layer, components in the coated or plated layer combine with oxygen in the heating atmosphere to form an oxide layer on the surface of the coating layer.

The thickness of the oxide layer is not particularly limited. However, the oxide layer is insulative and therefore may decrease spot weldability when the oxide layer is excessively thick. Therefore, from the viewpoint of further improving spot weldability, The thickness of the oxide layer is preferably 0.6 µm or less. When the thickness of the oxide layer is sufficiently thin, the oxide layer can be broken by electrode pressing force during spot welding, resulting in further improved spot weldability. From the above viewpoint, the thickness of the oxide layer is preferably 0.3 µm or less. From the viewpoint of spot weldability, the thinner the oxide layer, the better, and therefore a lower limit of the thickness of the oxide layer is not particularly limited and may be 0 µm.

The thickness of the oxide layer can be measured by SEM observation of a cross-section of the hot pressed member.

### (2) Steel sheet for hot press forming

The steel sheet for hot press forming according to an embodiment of the present disclosure includes the steel sheet and the coated or plated layer on at least one side of the steel sheet.

### [Steel sheet]

Any steel sheet may be used as the steel sheet without being particularly limited. The steel sheet may be either a cold-rolled steel sheet or a hot-rolled steel sheet. The chemical composition of the steel sheet is not particularly limited. Preferably, a steel sheet having the chemical composition provided in the description of the hot pressed member is used.

### [Coated or plated layer]

The steel sheet for hot press forming includes the coated or plated layer on at least one side of the steel sheet. The coated or plated layer may be on only one side of the steel sheet, but is preferably on both sides.

In order for the chemical composition of the coating layer after hot press forming to meet the above-mentioned conditions, the coated or plated layer of the steel sheet for hot press forming needs to have the following chemical composition.
Zn: 30.0 % to 70.0 %,
Si: 1.1 % to 8.0 %, and
Sr + Ca: 0.01 % to 5.0 %,
with the balance being Al and inevitable impurity.

Here, the Zn content of the coated or plated layer is preferably 35.0 % or more. However, the Zn content is preferably 65.0 % or less. The Si content of the coated or plated layer is preferably 1.3 % or more. However, the Si content is preferably 4.0 % or less. Further, Sr + Ca of the coated or plated layer is preferably 0.1 % or more. However, Sr + Ca is preferably 1.0 % or less.

That is, the coated or plated layer preferably has a chemical composition consisting of
Zn: 35.0 % to 65.0 %,
Si: 1.3 % to 4.0 %, and
Sr + Ca: 0.1 % to 1.0 %,
with the balance being Al and inevitable impurity.

Like the chemical composition of the coating layer, also in the chemical composition of the coated or plated layer, the total content of Sr and Ca is referred to as "Sr + Ca".

The chemical composition of the coated or plated layer can be measured by scanning electron microscope (SEM) energy-dispersive X-ray (EDX) analysis.

The coated or plated layer can be formed by any method without particular limitation. The coated or plated layer is preferably formed by hot-dip coating. In other words, the coated or plated layer is preferably a hot-dip coated layer.

The coating weight of the coated or plated layer is not particularly limited. From the viewpoint of corrosion resistance, a coating weight of 30 g/m² or more per steel sheet side is preferred. From the viewpoint of production cost, a coating weight of 200 g/m² or less per steel sheet side is preferred. Coating weight of the coated or plated layer can be determined by dissolving and removing the coated or plated layer from the surface of the steel sheet for hot press forming using an acid solution and subtracting the weight after removal from the weight of the steel sheet for hot press forming before removal. An inhibitor that inhibits dissolution of the base steel sheet is added to the acid solution.

### (3) Method of producing hot pressed member

Next, a preferred method of producing the hot pressed member according to the present disclosure is described.

The hot pressed member can be produced by subjecting the steel sheet for hot press forming that meets the above conditions to hot press forming.

The method of hot press forming is not particularly limited and may be a conventional method. Typically, the steel sheet for hot press forming is heated to a defined heating temperature (heat treatment process), and then the steel sheet for hot press forming heated in the heat treatment process is subjected to hot press forming (hot press process). Preferred hot press forming conditions are described below.

### [Heat treatment]

In the heat treatment process, the steel sheet for hot press forming is heated to a heating temperature of the Ac₃ transformation temperature or more and 980 °C or less. By setting the heating temperature to the Ac₃ transformation temperature or more, microstructure of the steel sheet can be austenitized. Austenite becomes a hard phase, such as martensite, by subsequent rapid cooling during hot press forming, and as a result, the hot pressed member can be made stronger. When the heating temperature is lower than the Ac₃ transformation temperature, the austenite volume fraction in the heated steel sheet decreases, resulting in insufficient martensite volume fraction after hot press forming, and sufficient tensile strength cannot be secured. However, when the heating temperature is higher than 980 °C, alloying of the coated or plated layer may become excessive, resulting in excessive Fe content of the coating layer. Even when the Fe content is not excessive, Zn oxidation becomes excessive, and therefore the metallic Zn phase cannot remain in the coating layer. Therefore, a hot pressed member that meets the conditions of the present disclosure cannot be obtained. Further, when the heating temperature is higher than 980 °C, a thick oxide layer is formed, and crystal grain size becomes excessively coarse, resulting in reduced bending collapsibility.

The Ac₃ transformation temperature can be determined by the following expression (1). Ac3 transformation temperature (°C) = 881 - 206C + 53Si - 15Mn - 20Ni - 1Cr - 27Cu + 41Mo

Here, each element symbol in expression (1) represents content in mass% of the corresponding element. The content of elements not included is calculated as 0. For example, when Ni, Cu, and Mo are not included, expression (2) below may be used. Ac3 transformation temperature (°C) = 881 - 206C + 53Si - 15Mn - 1Cr

Here, each element symbol in expression (2) represents content in mass% of the corresponding element. The content of elements not included is calculated as 0.

In the heat treatment process, after heating to the heating temperature, holding at the heating temperature may be performed. Holding time to hold at the heating temperature is not particularly limited. When the holding time is longer than 5 min, alloying of the coated or plated layer becomes excessive, and the Fe content of the coating layer becomes excessive, and therefore a hot pressed member that meets the conditions of the present disclosure may not be obtained. In addition, the thickness of the oxide layer becomes excessive. The holding time is therefore preferably 5 min or less. The holding time may be 0 s, as the holding is an optional process. However, from the viewpoint of uniformly austenitizing the base steel sheet, the holding time is preferably 10 s or longer.

The method of heating the steel sheet for hot press forming in the heat treatment process is not particularly limited and any method can be used. The heating can be performed, for example, by heating in a heating furnace, electrical resistance heating, induction heating, high-frequency heating, flame heating, and the like. Any heating furnace, such as an electric furnace or a gas furnace, may be used as the heating furnace.

### [Hot press forming]

After the heating, the steel sheet for hot press forming is subjected to hot press forming to obtain the hot pressed member. In the hot press forming, cooling is performed using a press mold or a refrigerant such as water at the same time as or immediately after forming. According to the present disclosure, hot press forming conditions are not particularly limited. For example, hot press forming can be performed at 600 °C to 800 °C, which is a typical temperature range for hot press forming.

### EXAMPLES

To confirm the effects of the present disclosure, we produced steel sheets for hot press forming and hot pressed members using the steel sheets for hot press forming and evaluated the properties thereof.

### • Steel sheets for hot press forming

The coated layers were formed on surfaces of the steel sheets for hot press forming by the following procedure. Specifically, coated layers were formed on both sides of each steel sheet having a thickness of 1.4 mm by a continuous galvanizing line (CGL). As the steel sheets, cold-rolled steel sheets were used, each having a chemical composition consisting of C: 0.24 %, Si: 0.25 %, Mn: 1.3 %, P: 0.01 %, S: 0.002 %, Al: 0.03 %, N: 0.005 %, Cr: 0.16 %, Ti: 0.03 %, B: 0.002 %, and Sb: 0.008 %, with the balance being Fe and inevitable impurity. The Ac₃ transformation temperature of the cold-rolled steel sheets was 825 °C. Further, the temperature of the coating bath was 600 °C and the coating weight of the coated layer was 100 g/m² per side of the steel sheet, that is, 200 g/m² in total.

### (Chemical composition of coated layer)

The chemical composition of the resulting coated layer was measured by scanning electron microscope (SEM) energy dispersive X-ray (EDX) area analysis. In the SEM-EDX analysis, a SEM (JSM-7200F) produced by JEOL Ltd. and an EDX detector (UltraDry) produced by Thermo Fisher Scientific Inc. were used with an accelerating voltage of 15.0 kV. The results are listed in Tables 1 and 2.

### • Hot pressed member

Each of the resulting steel sheets for hot press forming were then subjected to hot press forming, with the conditions in Tables 3 and 4, to obtain hot pressed members. Specifically, the steel sheets for hot press forming were first cut to a size of 70 mm × 150 mm and subjected to heat treatment in an electric furnace. The heating temperature and the holding time at the heating temperature in the heat treatment were as listed in Tables 3 and 4. The steel sheets for hot press forming were then removed from the electric furnace and subjected to hot press forming using a flat press mold. The forming start temperature was set at 700 °C.

The presence or absence of the metallic Zn phase, the chemical composition of the coating layer, and the thickness of the oxide layer were then evaluated for each of the resulting hot pressed members using the following procedures. The measurement results are listed in Tables 3 and 4.

### (Metallic Zn phase)

Whether the metallic Zn phase is present or absent in the coating layer was determined by X-ray diffraction. In the X-ray diffraction, by using SmartLab produced by Rigaku Corporation, an analysis was performed with a used X-ray of Cu-Kα, a tube voltage of 40 kV, a tube current of 30 mA, and a scanning speed of 4°/min.

### (Chemical composition of coating layer)

The chemical composition of the coating layer was measured by area analysis using SEM-EDX. In the SEM-EDX analysis, a SEM (JSM-7200F) produced by JEOL Ltd. and an EDX detector (UltraDry) produced by Thermo Fisher Scientific Inc. were used with an accelerating voltage of 15.0 kV.

### (Thickness of oxide layer)

A test piece for cross-section observation was taken from the flat top surface of the hot pressed member and observed to measure the thickness of the oxide layer. Specifically, the cross-section of the surface of the hot pressed member was observed using a SEM at 500× magnification, the thickness of the oxide layer was measured at 20 arbitrary locations, and an average value was used as the thickness of the oxide layer.

Next, spot weldability and corrosion resistance at cut portion were evaluated for each of the resulting hot pressed members using the following procedures. The measurement results are listed in Tables 3 and 4.

### (Spot weldability)

Resistance spot welding was performed with two test pieces taken from the hot pressed member overlapped. An AC spot welder equipped with a DR-type electrode (chromium copper) having a leading end curve surface diameter of 6 mm and a curve surface curvature radius (leading end R) of 40 mm was used for the resistance spot welding. The shape of the test pieces was 30 mm × 50 mm strips and the electrode force was 3.5 kN. Resistance spot welding was performed by varying the current value from 4 kA to the current value at which spattering occurred. The range from the current value at which nugget diameter was 4 t^{1/2} mm (t = sheet thickness) to the current value at which spattering occurred was defined as the appropriate current range. The wider the appropriate current range, the better the spot weldability. An appropriate current range of 1.0 kA or more was judged to indicate sufficient appropriate current range.

### (Corrosion resistance at cut portion)

Each test piece for corrosion resistance evaluation was prepared by phosphate chemical conversion treatment and electrodeposition coating on a test piece taken from a hot pressed member. Cross-cut scratches (60° angle) totaling 160 mm in length (80 mm each) were made in the center of the test piece for corrosion resistance evaluation, and then the test piece was subjected to a corrosion test (SAE-J2334). Corrosion resistance at cut portion was evaluated based on the occurrence of red rust after 30 cycles, using the following criteria.
Grade 4: no red rust in the cut portion
Grade 3: length of red rust occurrence in cuts was less than 2 mm
Grade 2: length of red rust occurrence in cuts was 2 mm or more and less than 4 mm
Grade 1: length of red rust occurrence in cuts was 4 mm or more

A grade of 3 or better was judged to indicate sufficient corrosion resistance at cut portion.

As can be seen from Tables 3 and 4, the hot pressed members meeting the conditions of the present disclosure had both excellent spot weldability and corrosion resistance at cut portion.

### [Table 1]

**Table 1**

| No. | Steel sheet for hot press forming | | | | | |
|---|---|---|---|---|---|---|
| | Chemical composition of coated layer (mass%) | | | | | |
| | Al | Zn | Si | Sr + Ca | | |
| | | | | Sr | Ca | Sr + Ca |
| 1 | 55.2 | 43.1 | 1.6 | 0.15 | 0 | 0.15 |
| 2 | 68.5 | 29.8 | 1.6 | 0.15 | 0 | 0.15 |
| 3 | 67.6 | 30.7 | 1.6 | 0.15 | 0 | 0.15 |
| 4 | 64.3 | 34.0 | 1.6 | 0.15 | 0 | 0.15 |
| 5 | 61.6 | 36.7 | 1.6 | 0.15 | 0 | 0.15 |
| 6 | 59.1 | 39.2 | 1.6 | 0.15 | 0 | 0.15 |
| 7 | 48.4 | 49.9 | 1.6 | 0.15 | 0 | 0.15 |
| 8 | 46.1 | 52.2 | 1.6 | 0.15 | 0 | 0.15 |
| 9 | 40.8 | 57.5 | 1.6 | 0.15 | 0 | 0.15 |
| 10 | 35.9 | 62.4 | 1.6 | 0.15 | 0 | 0.15 |
| 11 | 33.2 | 65.1 | 1.6 | 0.15 | 0 | 0.15 |
| 12 | 28.4 | 69.9 | 1.6 | 0.15 | 0 | 0.15 |
| 13 | 26.7 | 71.6 | 1.6 | 0.15 | 0 | 0.15 |
| 14 | 54.3 | 45.6 | 0.0 | 0.15 | 0 | 0.15 |
| 15 | 53.8 | 45.6 | 0.5 | 0.15 | 0 | 0.15 |
| 16 | 53.3 | 45.5 | 1.1 | 0.15 | 0 | 0.15 |
| 17 | 53.3 | 45.3 | 1.3 | 0.15 | 0 | 0.15 |
| 18 | 53.5 | 44.8 | 1.6 | 0.15 | 0 | 0.15 |
| 19 | 52.5 | 44.4 | 3.0 | 0.15 | 0 | 0.15 |
| 20 | 52.0 | 43.9 | 4.0 | 0.15 | 0 | 0.15 |
| 21 | 52.2 | 43.2 | 4.5 | 0.15 | 0 | 0.15 |
| 22 | 49.5 | 44.4 | 6.0 | 0.15 | 0 | 0.15 |
| 23 | 48.0 | 43.9 | 8.0 | 0.15 | 0 | 0.15 |
| 24 | 46.4 | 43.5 | 10.0 | 0.15 | 0 | 0.15 |
| 25 | 52.8 | 45.6 | 1.6 | 0.0 | 0 | 0.0 |
| 26 | 52.8 | 45.6 | 1.6 | 0.01 | 0 | 0.01 |
| 27 | 52.9 | 45.5 | 1.6 | 0.05 | 0 | 0.05 |
| 28 | 53.0 | 45.3 | 1.6 | 0.1 | 0 | 0.10 |
| 29 | 53.4 | 44.8 | 1.6 | 0.2 | 0 | 0.20 |
| 30 | 53.5 | 44.4 | 1.6 | 0.5 | 0 | 0.50 |

### [Table 2]

**Table 2**

| No. | Steel sheet for hot press forming | | | | | |
|---|---|---|---|---|---|---|
| | Chemical composition of coated layer (mass%) | | | | | |
| | Al | Zn | Si | Sr + Ca | | |
| | | | | Sr | Ca | Sr + Ca |
| 31 | 53.2 | 44.2 | 1.6 | 1.0 | 0 | 1.00 |
| 32 | 52.8 | 44.1 | 1.6 | 1.5 | 0 | 1.50 |
| 33 | 51.6 | 43.8 | 1.6 | 3.0 | 0 | 3.0 |
| 34 | 50.3 | 43.6 | 1.6 | 4.5 | 0 | 4.50 |
| 35 | 49.6 | 43.3 | 1.6 | 5.5 | 0 | 5.50 |
| 36 | 54.8 | 43.6 | 1.6 | 0 | 0.02 | 0.02 |
| 37 | 55.0 | 43.3 | 1.6 | 0 | 0.15 | 0.15 |
| 38 | 54.7 | 43.2 | 1.6 | 0 | 0.5 | 0.50 |
| 39 | 53.8 | 43.1 | 1.6 | 0 | 1.5 | 1.50 |
| 40 | 49.6 | 43.3 | 1.6 | 0 | 5.5 | 5.50 |
| 41 | 55.0 | 43.4 | 1.6 | 0.02 | 0.03 | 0.05 |
| 42 | 54.9 | 43.3 | 1.6 | 0.08 | 0.08 | 0.16 |
| 43 | 54.5 | 43.6 | 1.6 | 0.20 | 0.15 | 0.35 |
| 44 | 52.7 | 43.7 | 1.6 | 1.0 | 1.0 | 2.0 |
| 45 | 48.4 | 44.0 | 1.6 | 3.0 | 3.0 | 6.0 |
| 46 | 53.8 | 44.5 | 1.6 | 0.15 | 0 | 0.15 |
| 47 | 57.8 | 40.5 | 1.6 | 0.1 | 0 | 0.10 |
| 48 | 41.8 | 56.5 | 1.6 | 0.1 | 0 | 0.10 |
| 49 | 52.8 | 45.5 | 1.6 | 0.15 | 0 | 0.15 |
| 50 | 53.4 | 44.9 | 1.6 | 0.15 | 0 | 0.15 |
| 51 | 53.1 | 45.2 | 1.6 | 0.15 | 0 | 0.15 |
| 52 | 53.2 | 45.1 | 1.6 | 0.15 | 0 | 0.15 |
| 53 | 53.4 | 44.9 | 1.6 | 0.15 | 0 | 0.15 |
| 54 | 53.7 | 44.6 | 1.6 | 0.15 | 0 | 0.15 |
| 55 | 53.2 | 45.1 | 1.6 | 0.15 | 0 | 0.15 |
| 56 | 53.7 | 44.6 | 1.6 | 0.15 | 0 | 0.15 |
| 57 | 53.9 | 44.4 | 1.6 | 0.15 | 0 | 0.15 |
| 58 | 53.5 | 44.8 | 1.6 | 0.15 | 0 | 0.15 |
| 59 | 53.6 | 44.7 | 1.6 | 0.15 | 0 | 0.15 |

### [Table 3]

**Table 3**

| No. | Heat treatment | | Hot pressed member | | | | | | | | | Evaluation result | | Remarks |
|---|---|---|---|---|---|---|---|---|---|---|---|---|---|---|
| | | | Chemical composition of coating layer (mass%) | | | | | | | Metallic Zn phase | Oxide layer | Spot weldability | Corrosion resistance at cut portion | |
| | Heating temp. (°C) | Holding time (min) | Al | Zn | Si | Sr + Ca | | | Fe | Presence or absence | Thickness (µm) | Appropriate current range (kA) | | |
| | | | | | | Sr | Ca | Sr + Ca | | | | | | |
| 1 | 900 | 1.5 | 27.6 | 35.3 | 1.6 | 0.15 | 0 | 0.15 | 35.3 | Present | 0.2 | 3.5 | 4 | Example |
| 2 | 900 | 1.5 | 34.3 | 24.7 | 1.6 | 0.15 | 0 | 0.15 | 39.3 | Absent | 0.1 | 3.0 | 2 | Comparative Example |
| 3 | 900 | 1.5 | 33.8 | 25.4 | 1.6 | 0.15 | 0 | 0.15 | 39.0 | Present | 0.1 | 3.0 | 3 | Example |
| 4 | 900 | 1.5 | 32.2 | 28.2 | 1.6 | 0.15 | 0 | 0.15 | 37.9 | Present | 0.1 | 3.0 | 3 | Example |
| 5 | 900 | 1.5 | 30.8 | 30.4 | 1.6 | 0.15 | 0 | 0.15 | 37.0 | Present | 0.1 | 3.0 | 3 | Example |
| 6 | 900 | 1.5 | 29.6 | 32.5 | 1.6 | 0.15 | 0 | 0.15 | 36.2 | Present | 0.2 | 3.2 | 3 | Example |
| 7 | 900 | 1.5 | 24.2 | 40.9 | 1.6 | 0.15 | 0 | 0.15 | 33.2 | Present | 0.2 | 3.0 | 4 | Example |
| 8 | 900 | 1.5 | 23.1 | 41.7 | 1.6 | 0.15 | 0 | 0.15 | 33.5 | Present | 0.2 | 2.8 | 4 | Example |
| 9 | 900 | 1.5 | 20.4 | 46.0 | 1.6 | 0.15 | 0 | 0.15 | 31.9 | Present | 0.2 | 2.5 | 4 | Example |
| 10 | 900 | 1.5 | 18.0 | 49.3 | 1.6 | 0.15 | 0 | 0.15 | 31.0 | Present | 0.3 | 2.2 | 4 | Example |
| 11 | 900 | 1.5 | 16.6 | 50.7 | 1.6 | 0.15 | 0 | 0.15 | 30.9 | Present | 0.4 | 1.6 | 4 | Example |
| 12 | 900 | 1.5 | 14.2 | 54.5 | 1.6 | 0.15 | 0 | 0.15 | 29.6 | Present | 0.4 | 1.3 | 4 | Example |
| 13 | 900 | 1.5 | 13.4 | 55.8 | 1.6 | 0.15 | 0 | 0.15 | 29.1 | Present | 1.0 | 0.5 | 2 | Comparative Example |
| 14 | 900 | 1.5 | 18.4 | 31.9 | 0 | 0.15 | 0 | 0.15 | 49.5 | Present | 1.0 | 0.8 | 2 | Comparative Example |
| 15 | 900 | 1.5 | 21.5 | 31.9 | 0.5 | 0.15 | 0 | 0.15 | 45.9 | Present | 0.7 | 1.2 | 2 | Comparative Example |
| 16 | 900 | 1.5 | 22.9 | 31.9 | 1.1 | 0.15 | 0 | 0.15 | 44.0 | Present | 0.2 | 1.6 | 4 | Example |
| 17 | 900 | 1.5 | 26.6 | 31.7 | 1.3 | 0.15 | 0 | 0.15 | 40.2 | Present | 0.1 | 2.8 | 4 | Example |
| 18 | 900 | 1.5 | 26.7 | 31.4 | 1.6 | 0.15 | 0 | 0.15 | 40.2 | Present | 0.1 | 3.2 | 4 | Example |
| 19 | 900 | 1.5 | 26.2 | 31.1 | 3.0 | 0.15 | 0 | 0.15 | 39.5 | Present | 0.1 | 3.5 | 4 | Example |
| 20 | 900 | 1.5 | 26.0 | 30.7 | 4.0 | 0.15 | 0 | 0.15 | 39.1 | Present | 0.1 | 3.2 | 4 | Example |
| 21 | 900 | 1.5 | 26.1 | 30.2 | 4.5 | 0.15 | 0 | 0.15 | 39.0 | Present | 0.2 | 2.7 | 3 | Example |
| 22 | 900 | 1.5 | 24.7 | 31.1 | 6.0 | 0.15 | 0 | 0.15 | 38.0 | Present | 0.2 | 2.5 | 3 | Example |
| 23 | 900 | 1.5 | 24.0 | 30.7 | 8.0 | 0.15 | 0 | 0.15 | 37.1 | Present | 0.3 | 2.8 | 3 | Example |
| 24 | 900 | 1.5 | 23.2 | 30.5 | 10.0 | 0.15 | 0 | 0.15 | 36.2 | Present | 0.3 | 2.6 | 2 | Comparative Example |
| 25 | 900 | 1.5 | 26.4 | 31.9 | 1.6 | 0.0 | 0 | 0.0 | 40.1 | Present | 2.0 | 0.4 | 2 | Comparative Example |
| 26 | 900 | 1.5 | 26.4 | 31.9 | 1.6 | 0.01 | 0 | 0.01 | 40.1 | Present | 0.4 | 1.6 | 3 | Example |
| 27 | 900 | 1.5 | 26.4 | 31.9 | 1.6 | 0.05 | 0 | 0.05 | 40.1 | Present | 0.4 | 1.8 | 4 | Example |
| 28 | 900 | 1.5 | 26.5 | 31.7 | 1.6 | 0.1 | 0 | 0.1 | 40.1 | Present | 0.1 | 2.8 | 4 | Example |
| 29 | 900 | 1.5 | 26.7 | 31.4 | 1.6 | 0.2 | 0 | 0.2 | 40.1 | Present | 0.1 | 3.2 | 4 | Example |
| 30 | 900 | 1.5 | 26.8 | 31.1 | 1.6 | 0.5 | 0 | 0.5 | 40.1 | Present | 0.1 | 3.0 | 4 | Example |

### [Table 4]

**Table 4**

| No. | Heat treatment | | Hot pressed member | | | | | | | | | Evaluation result | | Remarks |
|---|---|---|---|---|---|---|---|---|---|---|---|---|---|---|
| | | | Chemical composition of coating layer (mass%) | | | | | | | Metallic Zn phase | Oxide layer | Spot weldability | Corrosion resistance at cut portion | |
| | Heating temp. (°C) | Holding time (min) | Al | Zn | Si | Sr + Ca | | | Fe | Presence or absence | Thickness (µm) | Appropriate current range (kA) | | |
| | | | | | | Sr | Ca | Sr + Ca | | | | | | |
| 31 | 900 | 1.5 | 26.6 | 30.9 | 1.6 | 1.0 | 0 | 1.0 | 39.9 | Present | 0.2 | 2.2 | 4 | Example |
| 32 | 900 | 1.5 | 26.4 | 30.9 | 1.6 | 1.5 | 0 | 1.5 | 39.6 | Present | 0.2 | 1.4 | 4 | Example |
| 33 | 900 | 1.5 | 25.8 | 30.7 | 1.6 | 3.0 | 0 | 3.0 | 38.9 | Present | 0.3 | 1.4 | 4 | Example |
| 34 | 900 | 1.5 | 25.2 | 30.5 | 1.6 | 4.5 | 0 | 4.5 | 38.2 | Present | 0.3 | 1.4 | 4 | Example |
| 35 | 900 | 1.5 | 24.8 | 30.3 | 1.6 | 5.5 | 0 | 5.5 | 37.8 | Present | 0.4 | 0.4 | 3 | Comparative Example |
| 36 | 900 | 1.5 | 27.4 | 30.5 | 1.6 | 0.0 | 0.02 | 0.02 | 40.5 | Present | 0.4 | 1.8 | 3 | Example |
| 37 | 900 | 1.5 | 27.5 | 30.3 | 1.6 | 0.0 | 0.15 | 0.15 | 40.5 | Present | 0.1 | 2.6 | 4 | Example |
| 38 | 900 | 1.5 | 27.4 | 30.2 | 1.6 | 0.0 | 0.5 | 0.5 | 40.3 | Present | 0.1 | 2.8 | 4 | Example |
| 39 | 900 | 1.5 | 26.9 | 30.2 | 1.6 | 0.0 | 1.5 | 1.5 | 39.8 | Present | 0.2 | 1.6 | 4 | Example |
| 40 | 900 | 1.5 | 24.8 | 30.3 | 1.6 | 0.0 | 5.5 | 5.5 | 37.8 | Present | 0.4 | 0.4 | 3 | Comparative Example |
| 41 | 900 | 1.5 | 27.5 | 30.4 | 1.6 | 0.0 | 0.03 | 0.05 | 40.5 | Present | 0.3 | 1.8 | 4 | Example |
| 42 | 900 | 1.5 | 27.5 | 30.3 | 1.6 | 0.1 | 0.08 | 0.16 | 40.5 | Present | 0.1 | 3.0 | 4 | Example |
| 43 | 900 | 1.5 | 27.2 | 30.5 | 1.6 | 0.2 | 0.15 | 0.35 | 40.3 | Present | 0.1 | 2.8 | 4 | Example |
| 44 | 900 | 1.5 | 26.4 | 30.6 | 1.6 | 1.0 | 1.0 | 2.0 | 39.5 | Present | 0.3 | 1.6 | 4 | Example |
| 45 | 900 | 1.5 | 24.2 | 30.8 | 1.6 | 3.0 | 3.0 | 6.0 | 37.4 | Present | 0.5 | 0.3 | 3 | Comparative Example |
| 46 | 930 | 3.0 | 16.7 | 30.7 | 1.6 | 0.15 | 0 | 0.15 | 50.9 | Present | 0.1 | 1.2 | 4 | Example |
| 47 | 990 | 0.0 | 18.0 | 30.4 | 1.6 | 0.1 | 0 | 0.1 | 49.9 | Absent | 0.7 | 1.2 | 2 | Comparative Example |
| 48 | 960 | 3.0 | 10.9 | 37.9 | 1.6 | 0.1 | 0 | 0.1 | 49.6 | Present | 0.5 | 1.4 | 4 | Example |
| 49 | 900 | 0.0 | 29.0 | 37.7 | 1.6 | 0.15 | 0 | 0.15 | 31.5 | Present | 0.1 | 3.0 | 4 | Example |
| 50 | 900 | 0.5 | 27.8 | 36.8 | 1.6 | 0.15 | 0 | 0.15 | 33.7 | Present | 0.1 | 3.4 | 4 | Example |
| 51 | 900 | 1.5 | 26.6 | 35.7 | 1.6 | 0.15 | 0 | 0.15 | 36.0 | Present | 0.2 | 3.2 | 4 | Example |
| 52 | 900 | 3.0 | 20.7 | 34.2 | 1.6 | 0.15 | 0 | 0.15 | 43.3 | Present | 0.2 | 2.8 | 4 | Example |
| 53 | 900 | 5.0 | 13.9 | 33.2 | 1.6 | 0.15 | 0 | 0.15 | 51.2 | Present | 0.6 | 1.2 | 4 | Example |
| 54 | 900 | 7.0 | 10.2 | 31.2 | 1.6 | 0.15 | 0 | 0.15 | 56.9 | Present | 1.2 | 0.6 | 1 | Comparative Example |
| 55 | 900 | 1.5 | 26.6 | 35.6 | 1.6 | 0.15 | 0 | 0.15 | 36.1 | Present | 0.1 | 3.0 | 4 | Example |
| 56 | 930 | 1.5 | 23.6 | 33.4 | 1.6 | 0.15 | 0 | 0.15 | 41.2 | Present | 0.1 | 2.8 | 4 | Example |
| 57 | 960 | 1.5 | 19.9 | 32.4 | 1.6 | 0.15 | 0 | 0.15 | 45.9 | Present | 0.2 | 2.8 | 4 | Example |
| 58 | 980 | 1.5 | 13.9 | 31.8 | 1.6 | 0.15 | 0 | 0.15 | 52.6 | Present | 0.3 | 1.8 | 4 | Example |
| 59 | 1000 | 1.5 | 10.2 | 31.3 | 1.6 | 0.15 | 0 | 0.15 | 56.8 | Present | 0.5 | 0.6 | 2 | Comparative Example |

## Claims

1. A hot pressed member comprising:
a steel sheet;
a coating layer on at least one side of the steel sheet; and
an oxide layer on the coating layer,
wherein
the coating layer has a chemical composition containing, in mass%,
Zn: 25.0 % to 55.0 %,
Si: 1.1 % to 8.0 %,
Sr + Ca: 0.01 % to 5.0 %, and
Fe: 55.0 % or less,
with the balance being Al and inevitable impurity, and
the coating layer contains a metallic Zn phase.

2. The hot pressed member according to claim 1, wherein the thickness of the oxide layer is 0.3 µm or less.

3. A steel sheet for hot press forming, comprising a steel sheet and a coated or plated layer on at least one side of the steel sheet, wherein
the coated or plated layer has a chemical composition containing, in mass%,
Zn: 30.0 % to 70.0 %,
Si: 1.1 % to 8.0 %, and
Sr + Ca: 0.01 % to 5.0 %,
with the balance being Al and inevitable impurity.
